# EUROPÄISCHE PATENTSCHRIFT

(11) **EP 3 163 388 B1**
(45) Veröffentlichungstag und Bekanntmachung des Hinweises auf die Patenterteilung: **19.02.2020**
(21) Anmeldenummer: 15192337.2
(22) Anmeldetag: 30.10.2015
(51) Int. Cl.: G05B 19/042, H04L 12/66

(54) **VERFAHREN ZUR KONFIGURATION VON FELDGERÄTEN UND FELDGERÄT MIT EINER KONFIGURATION FÜR ZWEI BUSSYSTEME**
METHOD FOR CONFIGURING FIELD DEVICES AND FIELD DEVICE HAVING A CONFIGURATION FOR TWO BUS SYSTEMS
PROCEDE DE CONFIGURATION D'APPAREILS DE TERRAIN ET APPAREIL DE TERRAIN AYANT UNE CONFIGURATION POUR DEUX SYSTEMES DE BUS

(43) Veröffentlichungstag der Anmeldung: 03.05.2017
(73) Patentinhaber: Bürkert Werke GmbH, 74653 Ingelfingen (DE)
(72) Erfinder: Schmötzer, Ralf, 74677 Hohebach (DE)
(74) Vertreter: Prinz & Partner mbB

(56) Entgegenhaltungen:
- EP-A1- 2 730 062
- EP-A2- 1 901 145
- WO-A1-2013/004382
- US-A1- 2007 280 286
- US-A1- 2008 094 205
- US-B1- 6 711 629

## Beschreibung

### GEBIET DER ERFINDUNG

Die vorliegende Erfindung betrifft Feldbussysteme, Feldgeräte und Verfahren für Feldbussysteme und Feldgeräte.

### HINTERGRUND

Funktionen und Eigenschaften bspw. von CANopen-Geräten (Feldgeräten) werden weitgehend über Objekte beschrieben und in einem Objektverzeichnis verwaltet. Das Objektverzeichnis wird in elektronischer Form in sogenannten EDS-Dateien (Electronic Data Sheet) abgebildet. EDS-Dateien sind fester Bestandteil der Standardisierung im CANopen-Umfeld (CiA DS306 und CiA DS311) und haben eine grundlegende Bedeutung, wenn es um die Konfiguration in CANopen-Netzwerken geht. Das vom CiA spezifizierte Dateiformat stellt sicher, dass die Gerätebeschreibungen von Werkzeugen (zum Beispiel ProCANopen) unterschiedlicher Softwarehersteller gelesen und verarbeitet werden können. Eine EDS-Datei (elektronisches Datenblatt) ist somit ein Beispiel für eine Gerätebeschreibungsdatei, die auf einem Feldgerät als Firmware fest gespeichert ist und alle Informationen über die gerätespezifischen Parameter sowie Betriebsarten des Gerätes enthält. Durch die Gerätebeschreibungsdatei wird das Gerät ordnungsgemäß konfiguriert bzw. in Betrieb genommen.

Grundsätzlich können Feldgeräte mit fester Konfiguration und Feldgeräte mit einstellbarer Konfiguration unterschieden werden. Bei einem Feldgerät mit fester Konfiguration ist klar definiert, welche Prozessdaten (bspw. digitale Eingänge oder aktuelle Drehzahl) wann mit welcher Feldbus- (bspw. CAN)-Botschaft übertragen werden. Diese Einstellungen können nachträglich nicht mehr verändert werden. Oftmals sind Geräte mit fester Konfiguration in der Anschaffung günstiger als baugleiche Geräte, die eine Konfiguration des Gerätes im laufenden Betrieb ermöglichen. Der Grund hierfür liegt in den wesentlich einfacheren Softwarestrukturen und der daraus resultierenden transparenten Geräteimplementierung. Feldgeräte mit einstellbarer Konfiguration müssen vor der Inbetriebnahme konfiguriert werden. Unter Verwendung eines geeigneten Konfigurationswerkzeuges (beispielsweise ProCANopen) werden alle Geräteparameter definiert. Anschließend wird die so entstandene Konfiguration im Gerät gespeichert. Auch bei einem Feldgerät mit einstellbarer Konfiguration wird die mit dem Konfigurationswerkzeug erstellte Netzwerkkonfiguration in dem Feldgerät gespeichert, sofern die Geräte das "nicht-flüchtige" Speichern (Konfigurationsdaten gehen bei einem Neustart nicht verloren) der Konfigurationsdaten unterstützen. Alternativ hierzu kann die Gerätekonfiguration in einem Konfigurationsmanager abgelegt werden, der beim Systemstart die Konfiguration der konfigurierbaren Geräte durchführt. Der Konfigurationsmanager muss schon im Rahmen der Netzwerkkonfiguration definiert werden. Dieser Ansatz ermöglicht den einfachen Austausch eines defekten Gerätes durch ein neues, baugleiches Gerät (einfache Wartung des Systems).

Ferner kann ein Gateway zwei Feldbussysteme miteinander koppeln. Grundsätzlich kann es sich bei den beiden Feldbussystemen um solche eines gleichen Standards oder unterschiedlicher Standards handeln. Dabei werden gemäß dem Stand der Technik Parameter oder Variablen aus dem einen Feldbussystem (bspw. CANopen) über einen definierten Speicherbereich in dem koppelnden Gateway für das zweite Feldbussystem zugänglich gemacht. Allerdings erfordert dies auf der Seite des zweiten Feldbussystems eine aufwendige Zuordnung von Speicherplätzen oder Speicherbereichen zu den Parametern oder Variablen des ersten Systems. Ferner sind Feldgeräte in Subsystemen ohne genaue Kenntnis des Subsystems bzw. der Feldgeräte nicht zugänglich und jede Änderung des Subsystems erfordert eine Anpassung der Firmware. Das erschwert insbesondere den Zugriff auf Parameter des Subsystems, die in besonderen Situationen, bspw. zur Diagnose, nur gelegentlich abgefragt werden sollen.

EP 2730062 A1 offenbart ein System und Verfahren zur Parametrierung von Feldgeräten eines Automatisierungs- oder Steuerungssystems mit einer übergeordneten Einheit, die über eine erste Kommunikationsverbindung basierend auf einem ersten Feldbusprotokoll mit einem Kommunikationsschnittstellenmodul verbunden ist. Das Kommunikationsschnittstellenmodul ist über eine zweite Kommunikationsverbindung basierend auf einem zweiten Feldbusprotokoll mit wenigstens einem Feldgerät verbunden. Ein erster Netzwerkdienst überträgt die Parameter des Feldgerätes von der übergeordneten Einheit über die erste Kommunikationsverbindung in eine als Slave-Funktion arbeitende erste Funktionalität des Kommunikationsschnittstellenmoduls. Die in Unterblöcken abgelegten Parameter des Feldgerätes werden durch eine Funktionalität des Kommunikationsschnittstellenmoduls in einem Konfigurationsblock zusammengefasst, in einen Feldbusmaster-Stack des Kommunikationsschnittstellenmoduls geladen und über eine als Master-Funktion arbeitende Funktionalität des Kommunikationsschnittstellenmoduls mittels eines zweiten Netzwerkdienstes über die zweite Kommunikationsverbindung in das Feldgerät übertragen.

### ZUSAMMENFASSUNG DER ERFINDUNG

Es ist eine Aufgabe der Erfindung, die Konfiguration von Feldbusgeräten, insbesondere im Hinblick auf zwei gekoppelte Feldbussysteme (Netzwerke) für den Anwender zu erleichtern.

Gemäß einem Aspekt wird ein Verfahren zur Kommunikation mit Feldgeräten in einem ersten Feldbussystem (auch erstes Netzwerk, erster Feldbus oder Subnetz) und einem zweiten Feldbussystem bereitgestellt. Das erste Feldbussystem arbeitet nach einem ersten Standard und ist gemäß diesem ersten Standard aufgebaut. In dem Feldbussystem nach dem ersten Standard werden ein erstes Feldgerät und ein zweites Feldgerät angeordnet. Das erste Feldgerät und das zweite Feldgerät sind dann über einen Feldbus nach dem ersten Standard gekoppelt. Das erste Feldgerät wird ebenfalls an ein zweites Feldbussystem (auch zweites Netzwerk, zweiter Feldbus oder Hauptnetz) gekoppelt, das nach einem zweiten Standard aufgebaut ist und nach diesem zweiten Standard arbeitet. Auf das erste Feldgerät wird ein standardisiertes Objekt (auch "Object Route Function" oder "ORF") gemäß dem ersten Standard geladen. Das standardisierte Objekt enthält vorteilhaft keine Definition eines Datentyps. Ferner wird eine Beschreibung/Definition (Gerätebeschreibung) des standardisierten Objektes in dem zweiten Standard bereitgestellt. Aus dem zweiten Feldbussystem (Hauptnetz) wird dann mittels des standardisierten Objektes auf Parameter/Objekte des zweiten Feldgerätes in dem ersten Feldbussystems über das erste Feldgerät zugegriffen.

Dies ermöglicht einen transparenten Zugriff auf ein durch das erste Feldgerät abstrahiertes erstes Feldbussystem (Subnetz), ohne dass dafür ein Mapping notwendig ist. Das standardisierte Objekt ermöglicht einen direkten Zugriff auf jeden einzelnen Teilnehmer im ersten Feldbussystem (Subnetz) hinter dem ersten Feldgerät. Das standardisierte Objekt des ersten Feldgerätes dient dabei als Schnittstelle (Interface) zu dem jeweiligen anderen Kommunikationsprotokoll. Über dieses standardisierte Objekt (Interface) kann ein beliebiges Objekt innerhalb des ersten Feldbussystems adressiert werden.

Das standardisierte Objekt kann vorteilhaft mindestens Felder mit den folgenden Definitionen aufweisen: eine Zielangabe (einen Index und/oder Subindex und/oder eine Knotenidentifikationsnummer), ggf. eine Datenlänge für einen Schreibzugriff und einen Wert.

Das standardisierte Objekt ermöglicht insbesondere ein azyklisches Abfragen von Parametern oder Werten aus dem ersten Feldbussystem über das erste Feldgerät mittels des standardisierten Objektes.

Das erste Feldgerät kann vorteilhaft ein Gateway sein.

Der erste Standard kann ein CANopen Standard sein, wie er eingangs beschreiben wurde und bspw. im CiA 306 Draft Standard Proposal, Version: 1.3.7 vom 18. März 2014 beschrieben ist. Weitere Normen, die für den ersten Standard zur Anwendung gekommen sind:
- /*CiA301*/ *CiA 301, CANopen application layer and communication profile*
- /*CiA302*/ *CiA 302-4, CANopen Additional application layer functions -*
- *Part 4: Network variables and process image*
- /*CiA305*/ *CiA 305, CANopen layer setting services (LSS) and protocols*
- /*CiA401*/ *CiA 401, CANopen device profile generic I*/*O modules*
- /*ISO646*/ *ISO*/*IEC 646, ISO 7-bit coded character set for information interchange*
Vorteilhaft werden für die Feldgeräte in dem ersten Feldbussystem nach dem ersten Standard auch Gerätebeschreibungsdateien nach dem ersten Standard in Form von EDS- (Electronic Data Sheet) Gerätebeschreibungsdatei für den oben beschriebenen CANopen-Standard verwendet. Die Feldgeräte für den ersten Standard sind dann für ein Feldbussystem nach dem CANopen-Standard konfiguriert. Zyklische Abfragen können dann bspw. auch mittels herkömmlicher Objekte durchgeführt werden.

Der zweite Standard kann ein Standard für Feldbus (z. B. Profibus, Modbus, DeviceNet, CANopen) sein oder für Industrial Ethernet (z. B. Profinet, ModbusTCP, EthernetIP, Ethercat, Powerlink).

Die Standards/Spezifikationen werden durch die jeweiligen Technology Groups oder Foundations definiert und gepflegt, also kontinuierlich verändert, ergänzt und sind unter den folgenden Links im Internet zu finden:
- Profinet PNO
   http://www.profibus.com/technology/profinet/
- EthernetIP ODVA
   http://www.odva.org/Technology-Standards/EtherNet-IP/Overview
- ModbusTCP Modbus Organization http://www.modbus.org/ und im Speziellen: ModbusTCP http://www.modbus.org/docs/Modbus_Application_Protocol_V1_1b.pdf

Für Profinet, insbesondere die GSDML Gerätebeschreibung kann bspw. die folgende Version des Standards Anwendung finden:
GSDML Technical Specification for PROFINET IO Version 2.3, date November 2011

Für Ethernet/IP kommt nur beispielsweise die folgende Version in Betracht:
The CIP Networks Library Volume 2: EtherNet/IP Adaptation of CIP, Edition 1.19, April 2015

Gemäß dem ersten Standard kann ein normales Objekt (also nicht das standardisierte Objekt) bspw. durch bestimmte, vorgegebene Angaben definiert werden. Die folgenden Angaben kommen in Betracht: einen Parameternamen (ParameterNamen; notwendig); einen Objektypen (ObjectType (VAR); optional); einen Datentypen (DataType; notwendig); einen Zugangstypen (AccessType; notwendig); einen Default-Wert (DefaultValue; optional), das PDOMapping (optional), die SubNumber (optional), einen unteren Grenzwert (LowLimit; optional); einen oberen Grenzwert (HighLimit; optional); ein Flag (ObjFlags; optional) und den Wert CompactSubObj (optional). Hieraus ergibt sich, dass die Minimalangabe für ein normales Objekt nach dem ersten Standard in der Angabe eines Parameternamens, eines Datentyps und eines Zugangstyps besteht. Ein Beispiel für den Source-Code eines Objektes nach dem ersten Standard unter Verwendung eines Subindex ist bspw:

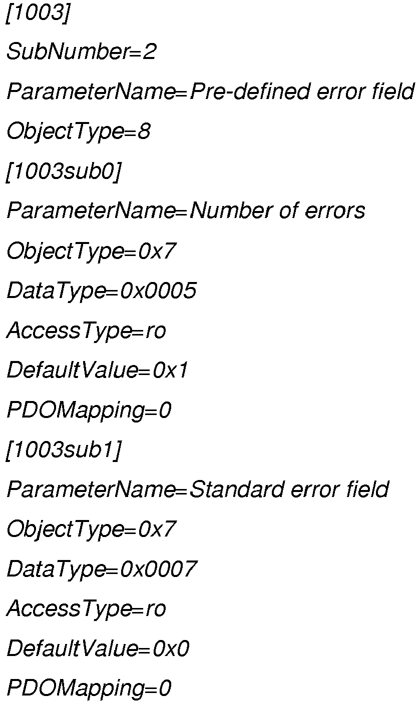

Im Unterschied dazu verwendet ein standardisiertes Objekt eine abgewandelte Form, die auf die Angabe eines Datentyps verzichtet. Das standardisierte Objekt verwendet einen minimalen Satz von Angaben wie er vorstehend und nachfolgend beschrieben ist. Dies ermöglicht einen Zugriff auf alle Parameter des ersten Feldbussystems (Subnetz), aus dem zweiten Feldbussystem (Hauptnetz) ohne dass eine Konfiguration des ersten Feldgerätes (Gateway) nötig ist. Ferner werden keine Ressourcen (Speicherplatz) durch die Zwischenspeicherung aller Werte gebunden. Zudem ist eine azyklische Abfrage der Parameter möglich.

Die vorliegende Erfindung stellt ebenfalls ein System bereit. Das System umfasst ein erstes Feldgerät und ein zweites Feldgerät, welche über einen ersten Feldbus (oder erstes Feldbussystem) gekoppelt sind, der nach einem ersten Standard arbeitet, wobei das erste Feldgerät ein standardisiertes Objekt nach dem ersten Standard aufweist, so dass aus dem zweiten Feldbussystem mit dem zweiten Feldgerät unmittelbar über das erste Feldgerät kommuniziert werden kann. Das standardisierte Objekt weist keine Definition eines Datentyps auf.

Das standardisierte Objekt kann mindestens Felder mit den folgenden Definitionen aufweisen: eine Zielangabe (bspw. einen Index und/oder Subindex und/oder eine Knotenidentifikationsnummer), ggf. eine Datenlänge für einen Schreibzugriff und einen Wert. Weitere Aspekte und Eigenschaften des Systems ergeben sich aus der vorstehenden und nachfolgenden Beschreibung.

Wie vorstehend verdeutlicht, wird in dem ersten Feldbussystem ein erstes Kommunikationsprotokoll nach dem ersten Standard verwendet. In dem ersten Feldbussystem sind Feldgeräte oder auch Knoten angeordnet, welche miteinander und mit dem ersten Feldgerät oder auch Gateway über den ersten Feldbus gekoppelt sind. Das erste Feldgerät ist ebenfalls mit einem zweiten Feldbussystem oder auch Hauptnetz gekoppelt, das nach einem zweiten Standard arbeitet. Insbesondere wird in dem zweiten Feldbussystem ein zweites Kommunikationsprotokoll verwendet, das nach dem zweiten Standard arbeitet. Das zweite Kommunikationsprotokoll ist von dem ersten Kommunikationsprotokoll verschieden. Insofern können das erste Feldbussystem oder Netzwerk und das zweite Feldbussystem oder Netzwerk auch dahingehend unterschieden werden, dass in den beiden Netzwerken zumindest zwei verschiedene Kommunikationsprotokolle verwendet werden.

### KURZE BESCHREIBUNG DER FIGUREN

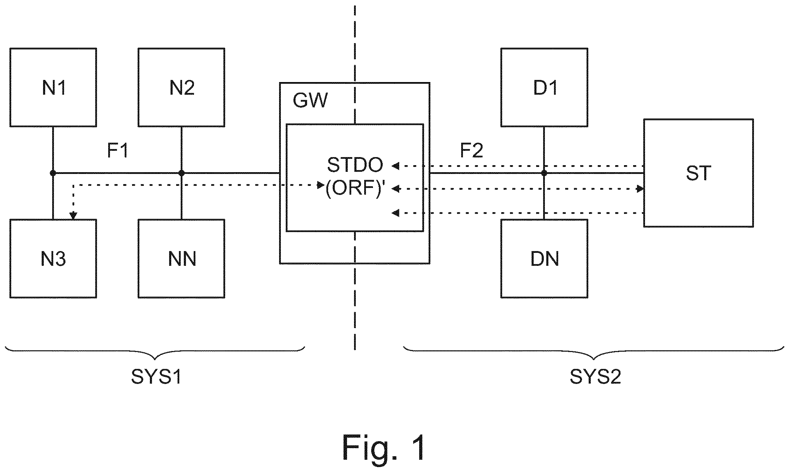

Weitere Aspekte und Merkmale der Erfindung werden anhand der nachfolgenden Beschreibung von Ausführungsbeispielen unter Bezugnahme auf die beigefügte Figur deutlich, wobei
FIG. 1 eine vereinfachte Blockdarstellung eines Ausführungsbeispiels ist.

### AUSFÜHRLICHE BESCHREIBUNG DER AUSFÜHRUNGSBEISPIELE

FIG. 1 ist eine vereinfachte Blockdarstellung eines Ausführungsbeispiels. Dargestellt ist ein erstes Feldbussystem oder Subnetz SYS1, das nach einem ersten Standard arbeitet. Der erste Standard kann CANopen sein. Entsprechend wird in dem ersten Feldbussystem SYS1 ein erstes Kommunikationsprotokoll nach dem ersten Standard verwendet. In dem ersten Feldbussystem sind Feldgeräte oder auch Knoten N1, N2, N3 bis NN angeordnet, welche miteinander und mit dem ersten Feldgerät oder auch Gateway GW über den ersten Feldbus F1 gekoppelt sind. Das erste Feldgerät GW ist ebenfalls mit einem zweiten Feldbussystem oder auch Hauptnetz SYS2 gekoppelt, das nach einem zweiten Standard arbeitet. Insbesondere wird in dem zweiten Feldbussystem SYS2 ein zweites Kommunikationsprotokoll verwendet, dass nach dem zweiten Standard arbeitet. Das zweite Kommunikationsprotokoll ist von dem ersten Kommunikationsprotokoll verschieden. Insofern können das erste Feldbussystem oder Netzwerk SYS1 und das zweite Feldbussystem oder Netzwerk SYS2 auch dahingehend unterschieden werden, dass in den beiden Netzwerken SYS1, SYS2 zumindest zwei verschiedene Kommunikationsprotokolle verwendet werden. In dem zweiten Feldbussystem SYS2 sind Feldgeräte oder einfach Geräte D1 bis DN und eine Steuerung ST vorgesehen, die durch einen zweiten Feldbus oder ein Netzwerk F2 miteinander gekoppelt sind. Der zweite Feldbus F2 ist ebenfalls an das erste Feldgerät GW gekoppelt. In dem ersten Feldgerät GW ist nun ein standardisiertes Objekt STDO vorgesehen, welches gemäß den Angaben in den Spalten unter "Object Route Function" der nachfolgenden Tabelle nach dem ersten Standard aufgebaut ist. Zudem enthält die Tabelle die Beschreibung des standardisierten Objektes für den zweiten Standard, der im vorliegenden Beispiel bspw. Profinet, Ethernet/IP (Industrial Ethernet) oder Modbus sein kann.

**Tabelle**

| **Object Route Function** | | | **Profinet** | | | **Ethernet/IP** | | | **Modbus** |
|---|---|---|---|---|---|---|---|---|---|
| Index | Subindex | Funktion | Slot | Subslot | Index | Class | Instance | Attribute | Adresse |
| 0X3C31 | 0x01 | Index/Subindex/NodeID | 0 | 1 | 1 | C7 | 1 | 3 | 1000 |
| | 0x02 | Data length for write access | 0 | 1 | 2 | C7 | 2 | 3 | 1002 |
| | 0x03 | Value UINT32 | 0 | 1 | 3 | C7 | 3 | 3 | 1004 |
| | 0x04 | Value string | 0 | 1 | 4 | C7 | 4 | 3 | 1006 |
| | 0x05 | result | 0 | 1 | 5 | C7 | 5 | 3 | 1016 |
| | 0x06 | call/cancel | 0 | 1 | 6 | C7 | 6 | 3 | 1018 |

Im Einzelnen haben die Angaben die folgende Bedeutung:
*Index*/*Subindex*/*NodeID:* Index und Subindex des Objekts aus dem man lesen/schreiben möchte. Zusätzlich muss die NodelD des Geräts (Feldgerätes im ersten Feldbussystem SYS1) angegeben werden. Der Index und Subindex ist in der Gerätebeschreibung, bspw. EDS, hinterlegt.
*Data length for write access:* Definiert die Datenlänge des Schreibbefehls in Byte. Die Datenlänge muss zum Lesen nicht angegeben werden.
*Value UINT32*: Hier wird der zu schreibende Wert vorgegeben oder der ausgelesene Wert wiedergegeben.
*Value string:* Dient zum Lesen und Schreiben von Texten, Daten größer 4 Byte.
*result:* Vorgangsresultat 0 = Befehl erfolgreich durchgeführt, 0 < Fehler beim Durchführen aufgetreten, FFFFFFFF = Lese/Schreib-Vorgang noch nicht abgeschlossen
*call*/*cancel:* führt den Befehl aus.

Demnach umfassen die Angaben des standardisierten Objektes mindestens eine Zielangabe (Index/Subindex/NodeID), eine Datenlänge (jedoch nur für einen Schreibbefehl) (Data length for write access) und einen Wert (Value UINT32; Value string). Ferner gibt es ein Feld für das Ergebnis (result) und ein Feld zum Aufrufen bzw. Aufheben (call/cancel). Diese Felder des standardisierten Objektes werden in den entsprechenden zweiten Standard übersetzt. So kann von einem zweiten Feldbussystem SYS2, das bspw. nach dem Profinet Standard arbeitet über die Angaben Slot "0", Subslot "1" und Index "1" bis "6" auf die Felder des standardisierten Objektes zugegriffen werden. Analog hierzu wird im Fall, dass das zweite Feldbussystem SYS2 nach Ethernet/IP arbeitet, über die entsprechenden Class, Instance und Attribute Anweisungen und im Falle des Modbus über die angegebenen Adressen zugegriffen.

In der Figur stellt eine durchgezogene Linie eine feste oder drahtlose Verbindung über den entsprechenden Feldbus F1, F2 dar. Die gepunkteten Linien stellen die direkten Zugriffe mittels des standardisierten Objektes STDO dar. Die gestrichelte Linie verdeutlicht die Unterteilung in die beiden Netwerke bzw. Feldbussysteme SYS1, SYS2.

Insgesamt wird so ein direkter Zugriff auf Parameter/Objekte von Feldgeräten N1 bis NN in dem ersten Feldbussystem SYS1 aus dem zweiten Feldbussystem SYS2 möglich. Vorteilhaft können diese direkten Zugriffe azyklisch erfolgen und bspw. von Steuerung ST ausgeführt werden.

## Patentansprüche

1. Verfahren zur Kommunikation mit Feldgeräten (N1..NN, GW, D1..DN) in einem ersten Feldbussystem (SYS1), das nach einem ersten Standard arbeitet, und einem zweiten Feldbussystem (SYS2), das nach einem zweiten Standard arbeitet, mit den Schritten:
- Anordnen eines ersten Feldgerätes (GW) und eines zweiten Feldgerätes (N2) in dem ersten Feldbussystem (SYS1),
- Koppeln des ersten Feldgerätes (GW) und des zweiten Feldgerätes (N2) über einen ersten Feldbus (F1) nach dem ersten Standard,
- Koppeln des ersten Feldgerätes (GW) an das zweite Feldbussystem (SYS2), das nach einem zweiten Standard arbeitet,
wobei das Verfahren **gekennzeichnet ist durch** die Schritte:
- Laden eines standardisierten Objektes (STDO) nach dem ersten Standard auf das erste Feldgerät (GW),
- Bereitstellen einer Beschreibung des standardisierten Objektes (STDO) in dem zweiten Feldbussystem (SYS2) und Verwenden des standardisierten Objektes (STDO) von dem zweiten Feldbussystem (SYS2) aus, um mittels des standardisierten Objektes (STDO) über das erste Feldgerät (GW) auf Parameter und/oder Objekte des zweiten Feldgeräts (N2) zuzugreifen, wobei das standardisierte Objekt (STDO) keine Definition eines Datentyps aufweist.

2. Verfahren nach Anspruch 1, wobei das standardisierte Objekt (STDO) Felder mit den folgenden Definitionen aufweist: eine Zielangabe und einen Wert.

3. Verfahren nach Anspruch 1 oder 2, umfassend: azyklisches Abfragen von Parametern oder Werten des zweiten Feldgerätes (N2) im ersten Feldbussystem (SYS1) aus dem zweiten Feldbussystem (SYS2) heraus und über das erste Feldgerät (GW) mittels des standardisierten Objektes (STDO).

4. Verfahren nach einem der vorstehenden Ansprüche, wobei das erste Feldgerät (GW) ein Gateway ist.

5. Verfahren nach einem der vorstehenden Ansprüche, wobei der erste Standard CANopen ist.

6. Verfahren nach einem der vorstehenden Ansprüche, wobei der zweite Standard ein Standard für Feldbus ist.

7. System umfassend ein erstes Feldgerät (GW) und ein zweites Feldgerät (N2), welche über ein erstes Feldbussystem (SYS1) gekoppelt sind, das nach einem ersten Standard arbeitet, wobei das erste Feldgerät (GW) auch mit einem zweiten Feldbussystem (SYS2) gekoppelt ist, das nach einem zweiten Standard aufgebaut ist und nach diesem arbeitet, und wobei das System **dadurch gekennzeichnet ist, dass** das erste Feldgerät (GW) ein standardisiertes Objekt (STDO) nach dem ersten Standard aufweist und eine Beschreibung des standardisierten Objektes (STDO) in dem zweiten Feldbussystem (SYS2) bereitgestellt wird, um mittels des standardisierten Objektes (STDO) von dem zweiten Feldbussystem (SYS2) aus über das erste Feldgerät (GW) auf Parameter und/oder Objekte des zweiten Feldgeräts (N2) zuzugreifen, wobei das standardisierte Objekt (STDO) keine Definition eines Datentyps aufweist.

8. System nach Anspruch 7, wobei das standardisierte Objekt (STDO) Felder mit den folgenden Definitionen aufweist: eine Zielangabe und einen Wert.

9. System nach Anspruch 7 oder 8, wobei das erste Feldgerät (GW) mittels des standardisierten Objekts (STDO) eingerichtet ist, um Parameter oder Werte des zweiten Feldgerätes (N2) über das erste Feldgerät (GW) mittels des standardisierten Objektes (STDO) azyklisch aus dem zweiten Feldbussystem (SYS2) heraus abzufragen.

10. System nach Ansprüche 7-9, wobei das erste Feldgerät (GW) ein Gateway ist.

11. System nach Ansprüche 7-10, wobei der erste Standard CANopen ist.

12. System nach Ansprüche 7-11, wobei der zweite Standard ein Standard für Feldbus ist.

## Claims

1. A method for the communication with field devices (N1..NN, GW, D1..DN) in a first fieldbus system (SYS1) working in accordance with a first standard, and in a second fieldbus system (SYS2) working in accordance with a second standard, comprising the steps of:
- arranging a first field device (GW) and a second field device (N2) in the first fieldbus system (SYS1),
- coupling the first field device (GW) and the second field device (N2) via a first fieldbus (F1) in accordance with the first standard,
- coupling the first field device (GW) to the second fieldbus system (SYS2) working in accordance with a second standard,
the method being **characterized by** the steps of:
- loading a standardized object (STDO) in accordance with the first standard on the first field device (GW),
- providing a description of the standardized object (STDO) in the second fieldbus system (SYS2), and using the standardized object (STDO) from the second fieldbus system (SYS2) so as to access parameters and/or objects of the second field device (N2) via the first field device (GW) using the standardized object (STDO), the standardized object (STDO) having no definition of a data type.

2. The method according to claim 1, wherein the standardized object (STDO) includes fields having the following definitions: a target specification and a value.

3. The method according to claim 1 or 2, comprising: the acyclic retrieval of parameters or values of the second field device (N2) in the first fieldbus system (SYS1) from the second fieldbus system (SYS2) and via the first field device (GW) using the standardized object (STDO).

4. The method according to any of the preceding claims, wherein the first field device (GW) is a gateway.

5. The method according to any of the preceding claims, wherein the first standard is CANopen.

6. The method according to any of the preceding claims, wherein the second standard is a standard for Fieldbus.

7. A system comprising a first field device (GW) and a second field device (N2) which are coupled via a first fieldbus system (SYS1) working in accordance with a first standard, the first field device (GW) being also coupled to a second fieldbus system (SYS2) set up in accordance with a second standard and working in accordance therewith, and the system being **characterized in that** the first field device (GW) has a standardized object (STDO) in accordance with the first standard, and a description of the standardized object (STDO) is provided in the second fieldbus system (SYS2) so as to access parameters and/or objects of the second field device (N2) from the second fieldbus system (SYS2) via the first field device (GW) using the standardized object (STDO), the standardized object (STDO) having no definition of a data type.

8. The system according to claim 7, wherein the standardized object (STDO) includes fields having the following definitions: a target specification and a value.

9. The system according to claim 7 or 8, wherein the first field device (GW) is set up using the standardized object (STDO) so as to retrieve parameters or values of the second field device (N2) via the first field device (GW) using the standardized object (STDO) in an acyclic manner from the second fieldbus system (SYS2).

10. The system according to claims 7-9, wherein the first field device (GW) is a gateway.

11. The system according to claims 7-10, wherein the first standard is CANopen.

12. The system according to claims 7-11, wherein the second standard is a standard for Fieldbus.

## Revendications

1. Procédé de communication avec des appareils de terrain (N1..NN, GW, D1..DN) dans un premier système de bus de terrain (SYS1) fonctionnant selon un premier standard, et dans un deuxième système de bus de terrain (SYS2) fonctionnant selon un deuxième standard, comprenant les étapes suivantes :
- agencement d'un premier appareil de terrain (GW) et d'un deuxième appareil de terrain (N2) dans le premier système de bus de terrain (SYS1),
- couplage du premier appareil de terrain (GW) et du deuxième appareil de terrain (N2) par l'intermédiaire d'un premier bus de terrain (F1) selon le premier standard,
- couplage du premier appareil de terrain (GW) au deuxième système de bus de terrain (SYS2) qui fonctionne selon un deuxième standard,
le procédé étant **caractérisé par** les étapes suivantes :
- charge d'un objet standardisé (STDO) selon le premier standard sur le premier appareil de terrain (GW),
- fournissement d'une description de l'objet standardisé (STDO) dans le deuxième système de bus de terrain (SYS2) et utilisation de l'objet standardisé (STDO) à partir du deuxième système de bus de terrain (SYS2) pour accéder à des paramètres et/ou à des objets du deuxième appareil de terrain (N2) au moyen de l'objet standardisé (STDO) par l'intermédiaire du premier appareil de terrain (GW), l'objet standardisé (STDO) ne comportant pas de définition d'un type de données.

2. Procédé selon la revendication 1, l'objet standardisé (STDO) présentant des zones comprenant les définitions suivantes : une indication de destination et une valeur.

3. Procédé selon la revendication 1 ou 2, comprenant : l'interrogation acyclique de paramètres ou de valeurs du deuxième appareil de terrain (N2) dans le premier système de bus de terrain (SYS1) à partir du deuxième système de bus de terrain (SYS2) et par l'intermédiaire du premier appareil de terrain (GW) au moyen de l'objet standardisé (STDO).

4. Procédé selon l'une des revendications précédentes, le premier appareil de terrain (GW) étant une passerelle.

5. Procédé selon l'une des revendications précédentes, le premier standard étant CANopen.

6. Procédé selon l'une des revendications précédentes, le deuxième standard étant un standard pour bus de terrain.

7. Système comprenant un premier appareil de terrain (GW) et un deuxième appareil de terrain (N2) qui sont couplés par un premier système de bus de terrain (SYS1) fonctionnant selon un premier standard, le premier appareil de terrain (GW) étant également couplé à un deuxième système de bus de terrain (SYS2) structuré selon un deuxième standard et fonctionnant selon celui-ci, et le système étant **caractérisé en ce que** le premier appareil de terrain (GW) présente un objet standardisé (STDO) selon le premier standard et **en ce qu'**une description de l'objet standardisé (STDO) est fournie dans le deuxième système de bus de terrain (SYS2) pour accéder à des paramètres et/ou à des objets du deuxième appareil de terrain (N2) au moyen de l'objet standardisé (STDO) à partir du deuxième système de bus de terrain (SYS2) par l'intermédiaire du premier appareil de terrain (GW), l'objet standardisé (STDO) ne comportant pas de définition d'un type de données.

8. Système selon la revendication 7, l'objet standardisé (STDO) présentant des zones comprenant les définitions suivantes : une indication de destination et une valeur.

9. Système selon la revendication 7 ou 8, le premier appareil de terrain (GW) étant aménagé au moyen de l'objet standardisé (STDO) de manière à interroger des paramètres ou des valeurs du deuxième appareil de terrain (N2) par l'intermédiaire du premier appareil de terrain (GW) au moyen de l'objet standardisé (STDO) de manière acyclique à partir du deuxième système de bus de terrain (SYS2).

10. Système selon les revendications 7 à 9, le premier appareil de terrain (GW) étant une passerelle.

11. Système selon les revendications 7 à 10, le premier standard étant CANopen.

12. Système selon les revendications 7 à 11, le deuxième standard étant un standard pour bus de terrain.
